# EUROPÄISCHE PATENTSCHRIFT

(11) **EP 3 421 954 B1**
(45) Veröffentlichungstag und Bekanntmachung des Hinweises auf die Patenterteilung: **27.07.2022**
(21) Anmeldenummer: 18166550.6
(22) Anmeldetag: 10.04.2018
(51) Int. Cl.: G01J 5/02, G01J 5/52

(54) **ABGLEICHVORRICHTUNG ZUR DURCHFÜHRUNG EINES UNGLEICHFÖRMIGKEITSABGLEICHS EINES INFRAROTDETEKTORS IN EINEM SUCHKOPF EINES LENKFLUGKÖRPERS, SUCHKOPF UND VERFAHREN ZUR DURCHFÜHRUNG EINES UNGLEICHFÖRMIGKEITSABGLEICHS**
ADJUSTING DEVICE FOR COMPENSATING FOR THE ASSYMETRICALITY OF AN INFRA-RED DETECTOR IN A SEEKER HEAD OF A GUIDED MISSILE, SEEKER HEAD AND METHOD FOR COMPENSATING FOR ASSYMETRICALITY
DISPOSITIF DE COMPENSATION DESTINÉ À LA MISE EN UVRE D'UNE COMPENSATION DES IRRÉGULARITÉS D'UN DÉTECTEUR INFRAROUGE DANS UN AUTODIRECTEUR D'UN MISSILE GUIDÉ, AUTODIRECTEUR ET PROCÉDÉ DE MISE EN UVRE D'UNE COMPENSATION DES IRRÉGULARITÉS

(30) Priorität: 28.06.2017 DE 102017006109
(43) Veröffentlichungstag der Anmeldung: 02.01.2019
(73) Patentinhaber: MBDA Deutschland GmbH, 86529 Schrobenhausen (DE)
(72) Erfinder: KRÖNER, Christoph, 85301 Schweitenkirchen (DE); WEISS, Kerstin, 86529 Schrobenhausen (DE); JÜLICH, Florian, 86153 Augsburg (DE); PRITZEN, Thomas, 86529 Schrobenhausen (DE)
(74) Vertreter: Isarpatent

(56) Entgegenhaltungen:
- EP-A1- 2 559 980
- EP-A1- 3 047 245
- WO-A1-2016/190298
- US-A- 4 672 211
- US-A- 5 756 991
- US-A1- 2008 210 872
- US-A1- 2009 250 614

## Beschreibung

Die vorliegende Erfindung betrifft ein eine Abgleichvorrichtung zur Durchführung eines Ungleichförmigkeitsabgleichs eines Infrarotdetektors in einem Suchkopf eines Lenkflugkörpers, einen Suchkopf und ein Verfahren zur Durchführung eines Ungleichförmigkeitsabgleichs.

Suchköpfe von Lenkflugkörpern werden üblicherweise mit Wärmebild-Sichtgeräten ausgestattet. Diese Wärmebild-Sichtgeräte können beispielsweise als InfrarotDetektoren, kurz IR-Detektoren, realisiert sein. Derartige IR-Detektoren werden häufig als Arrayanordnungen einer Vielzahl von IR-empfindlichen Pixeln eingesetzt und sind dazu ausgebildet, Infrarotstrahlung (IR-Strahlung) zu detektieren, die von einem Objekt emittiert wird. Hierzu weisen IR-Detektoren ein Substrat auf, welches in einer Vielzahl diskreter Bereiche mit einer IR-absorbierenden Schicht beschichtet ist. Diese Bereiche bilden die Pixel aus, welche jeweils die von dem Objekt emittierte Strahlung zumindest teilweise absorbieren. Diese Absorption kann beispielsweise als elektrische Spannung detektiert werden.

Innerhalb eines Pixelarrays eines IR-Detektors weisen die einzelnen Pixel in der Regel leicht voneinander abweichende Absorptionseigenschaften auf. Dies resultiert bei einer gleichmäßigen, konstanten Bestrahlung der Detektoren in voneinander abweichenden Detektionsergebnissen. Bei der Herstellung von IR-Detektoren wird deshalb üblicherweise eine Ungleichförmigkeitskorrektur durchgeführt, die als "Non-Uniformity Correction", kurz NUC, bezeichnet wird. Hierbei empfängt das Array Strahlung, die von einer homogen emittierenden Fläche mit bekannter Temperatur und mit bekannten Strahlungseigenschaften emittiert wird, und die für die von den einzelnen IR-Detektoren erfassten Strahlungswerte werden auf die durch die homogen emittierenden Fläche vorgegebenen Referenzwerte kalibriert.

Während der Lagerung von IR-Detektoren kann es zu einer Veränderung der Absorptionseigenschaften des Substratmaterials kommen, beispielsweise durch Alterung. Um zuverlässig präzise arbeiten zu können, ist es bei Suchköpfen von Lenkflugkörpern daher erforderlich, vor dem Einsatz erneut eine NUC durchzuführen. Die US 2008/0210872 A1 beschreibt einen Suchkopf, bei dem diese NUC mit Hilfe einer Blende durchgeführt wird, welche in das Sichtfeld des IR-Detektors eingeschoben wird. Dadurch wird die von außen einfallende IR-Strahlung abgeschattet und die Blende stellt eine gleichförmig emittierende Fläche zur Durchführung der NUC bereit. Die US5756991 beschreibt eine Vorrichtung zur Kalibrierung von Infrarotsystemen mit einem Glassubstrat oder Metallsubstrat und einem auf einer Rückseite des Substrats aufgebrachten Dünnschichtheizeiement.

Es ist Aufgabe der vorliegenden Erfindung ein Konzept zur Durchführung einer Ungleichförmigkeitskorrektur eines Infrarotdetektors bereitzustellen, das Ergebnisse mit verbesserter Genauigkeit liefert.

Diese Aufgabe wird jeweils durch die Gegenstände der unabhängigen Ansprüche gelöst.

Vorteilhafte Ausgestaltungen und Weiterbildungen ergeben sich aus den auf die unabhängigen Ansprüche rückbezogenen Unteransprüchen in Verbindung mit der Beschreibung.

Nach einem ersten Aspekt der Erfindung ist eine Abgleichvorrichtung zur Durchführung einer Ungleichförmigkeitskorrektur eines Infrarotdetektors in einem Suchkopf eines Lenkflugkörpers, wie im Anspruch 1 definiert, vorgesehen. Die Abgleichsvorrichtung weist einen Strahlungskörper und eine thermisch leitend an den Strahlungskörper gekoppelte Heizeinrichtung zur Einstellung einer Abgleichtemperatur des Strahlungskörpers auf.

Die erfindungsgemäße Abgleichvorrichtung stellt mit dem Strahlungskörper eine Referenzfläche zur Emission von Infrarotstrahlung, kurz IR-Strahlung, bereit. Der Strahlungskörper ist mittels der Heizeinrichtung erwärmbar. Das heißt, mittels der Heizeinrichtung kann an dem Strahlungskörper eine bestimmte Temperatur eingestellt werden, beispielsweise eine Temperatur zwischen 0 Grad Celsius und 60 Grad Celsius. Dies bietet den Vorteil, dass auch bei sehr niedrigen Umgebungstemperaturen, die beispielsweise beim Einsatz eines Lenkflugkörpers an einem Flugzeug auftreten können, mit hoher Genauigkeit eine Ungleichförmigkeitskorrektur eines Infrarotdetektors, kurz IR-Detektor, des Lenkflugkörpers durchführbar ist. Durch das Heizen des Strahlungskörpers wird die von diesem emittierte Strahlungsleistung im IR-Bereich vergrößert. Dadurch wird im Vergleich zu einer Ungleichförmigkeitskorrektur, die bei niedrigen Temperaturen ohne Heizen durchgeführt wird, eine größere Strahlungsleistung durch die einzelnen Pixel detektiert und Messungenauigkeiten oder Signalrauschen wirken sich in der Folge weniger stark auf die Genauigkeit der Ungleichförmigkeitskorrektur aus.

Die Ungleichförmigkeitskorrektur von Infrarotdetektoren wird, wie oben bereits erläutert auch als "Non-Uniformity Correction", kurz NUC, bezeichnet. Im Folgenden wird deshalb auch diese Begriffe verwendet.

Gemäß der Erfindung weist die Heizeinrichtung eine Trägerfolie und einen elektrischen Widerstandsheizdraht auf, welcher in einem Heizdrahtmuster an der Trägerfolie verläuft. Der Widerstandsheizdraht kann beispielsweise in den Querschnitt der Trägerfolie integriert oder auf einer Oberfläche der Trägerfolie angeordnet, insbesondere auf diese Oberfläche aufgedruckt sein. Das Heizdrahtmuster kann insbesondere, einen schlangenlinienförmigen Verlauf aufweisen. Es ist jedoch auch denkbar, dass das Heizdrahtmuster einen spiralförmigen, zick-zack-förmigen oder einen vergleichbaren Verlauf aufweist. Dies hat den Vorteil, dass eine große Länge des Heizdrahts pro Fläche angeordnet werden kann, wodurch die Heizleistung pro Fläche erhöht wird. Gleichzeitig wird die Wärmeleistung in homogener Weise über die Fläche verteilt. Die Trägerfolie kann beispielsweise als Kaptonfolie realisiert sein.

Gemäß der Erfindung weist der Strahlungskörper eine flächige Gestalt auf. Der Strahlungskörper kann insbesondere als dünnes platten- oder scheibenförmigen Bauteil gestaltet sein. Hierbei weist der Strahlungskörper auch eine Krümmung in einer oder mehreren Richtungen auf, ist also schalenförmig gestaltet. Die flächige Gestaltung bewirkt eine verbesserte flächige Verteilung der von der Heizeinrichtung abgegebenen Wärmeleistung. Insbesondere wird ein Temperaturgradient über die Oberfläche des Strahlungskörpers verringert.

Erfindungsgemäss ist vorgesehen, dass der Strahlungskörper als gewölbte Schale mit einem kreisförmigen Umfang gestaltet ist. Durch diese Gestaltung wird eine geometrische Anpassung des Strahlungskörpers an eine domartige Struktur oder eine Kuppelstruktur eines Suchkopfs verbessert. Die Abgleichvorrichtung kann dadurch in noch platzsparender Weise in den Suchkopf integriert werden. Gemäß einer weiteren Ausführungsform kann der Strahlungskörper beispielsweise eine Dicke in einem Bereich zwischen 0,1 mm und 4 mm, insbesondere zwischen 0,5 mm und 1,5 mm aufweisen und einen Durchmesser in einem Bereich zwischen 4 mm und 250 mm aufweisen. In diesem Bereich wird eine besonders gute Verteilung der Wärmeleistung erzielt. Insbesondere lassen sich auf diese Weise Temperaturgradienten reduzieren, beispielsweise bis auf 0,2 Kelvin.

Nach einer weiteren Ausführungsform der Abgleichvorrichtung kann der Strahlungskörper als Aluminiumkörper realisiert sein, wobei bevorzugt zumindest eine erste Oberfläche des Strahlungskörpers mit einer schwarzen, insbesondere IR schwarzen Deckschicht beschichtet ist. Die erste Oberfläche des Strahlungskörpers bildet somit die Referenzfläche zur Durchführung des NUC. Die erste Oberfläche kann damit auch als Emissionsfläche bezeichnet werden. Die schwarze Deckschicht weist einen hohen Emissionsgrad im Infrarotbereich auf, so dass in Bezug auf die Strahlung ein nahezu idealer schwarzer Körper bereitgestellt wird. Aluminium, worunter hierin auch Aluminiumlegierungen zu verstehen sind, weist eine sehr hohe Wärmeleitfähigkeit auf. Dadurch wird die zum Aufheizen des Strahlungskörpers benötigte Zeit verringert und eine homogene Wärmeverteilung erreicht. Auf diese Weise werden hohe Messgenauigkeiten bei der NUC erzielt.

Gemäß der Erfindung liegt der Strahlungskörper flächig an einer Kontaktoberfläche der Heizeinrichtung an. Hierbei ist eine Kontaktoberfläche des Strahlungskörpers mit einer Kontaktoberfläche der Heizeinrichtung kontaktiert. Die Kontaktoberfläche der Heizeinrichtung kann beispielsweise durch einen Oberflächenbereich der Trägerfolie gebildet sein. Die Kontaktoberfläche des Strahlungskörpers ist entgegengesetzt zu der Emissionsoberfläche des Strahlungskörpers gelegen bzw. entgegengesetzt zu dieser orientiert. Der Strahlungskörper kann insbesondere mit der Heizeinrichtung verklebt sein. Durch die flächige Anlage werden Wärmeverluste in der Wärmeübertragung zwischen Heizeinrichtung und Strahlungskörper reduziert. Auch fördert die flächige Anlage eine homogene Wärmeverteilung über den Strahlungskörper. Ferner wird durch die verbesserte Wärmeleitung die Aufheizzeit des Strahlungskörpers vorteilhaft reduziert.

Gemäß einer weiteren Ausführungsform weist die Abgleichvorrichtung zusätzlich einen optionalen Temperatursensor zur Erfassung einer Temperatur der Heizeinrichtung auf. Der Temperatursensor kann insbesondere als temperaturabhängiger elektrischer Widerstand, beispielsweise als PT-1000 Element, realisiert sein, der thermisch an die Heizeinrichtung gekoppelt ist. Beispielsweise kann der Temperatursensor an einer Oberfläche der Trägerfolie angebracht sein. Mittels des Temperatursensors ist eine Ist-Temperatur der Heizeinrichtung bzw. des Strahlungskörpers erfassbar, welche optional als Regelgröße zur Regelung der Heizleistung bzw. der Abgleichtemperatur verwendet werden kann. Auch kann die mittels des Temperatursensors erfasste Temperatur dazu verwendet werden, um festzustellen, ob überhaupt ein Heizen des Strahlungskörpers notwendig ist oder ob dieser bereits eine zur Durchführung einer NUC geeignete Abgleichstemperatur aufweist. Durch die Anordnung des Temperatursensors an der Heizeinrichtung anstatt an dem Strahlungskörper kann die Temperatur des Strahlungskörpers selbst in vorteilhafter Weise näherungsweise ermittelt wird. Hinzu kommt, dass durch die Anordnung an der Heizeinrichtung eine Beeinflussung der Abstrahlcharakteristik des Strahlungskörpers durch den Temperatursensor vermieden wird.

Nach einer weiteren Ausführungsform weist die Abgleichvorrichtung zusätzlich eine Halteeinrichtung auf, an welcher die Trägerfolie befestigt ist. Die Halteeinrichtung dient somit zur mechanisch steifen Lagerung der Trägerfolie. Die Halteeinrichtung erleichtert damit die Montage der Abgleichvorrichtung innerhalb eines Suchkopfs, insbesondere wird dadurch eine Montage als bewegbares Teil erleichtert.

Insbesondere kann vorgesehen sein, dass die Halteeinrichtung ein Trägerteil aufweist, welches eine den Strahlungskörper zumindest teilweise umschließende Ausnehmung definiert, und wobei zwischen dem Strahlungskörper und dem Trägerteil ein Luftspalt gebildet ist. Die Halteeinrichtung weist demnach ein platten- oder schalenförmiges Trägerteil auf, welches eine Ausnehmung definiert bzw. in welchem eine Ausnehmung ausgebildet ist. Die Ausnehmung kann insbesondere als einseitig offene Ausnehmung ausgebildet sein, das heißt diese weist einen über einen Teilbereich unterbrochenen Umfang auf. Es wird also optional ein einseitig offener Rahmen gebildet, der beispielsweise gabelförmig gestaltet ist. Die Trägerfolie ist an dem Trägerteil befestigt und der Strahlungskörper ist innerhalb dieser Ausnehmung angeordnet, wobei die Ausnehmung einen Innendurchmesser aufweist, der größer ist, als der Außendurchmesser des Strahlungskörpers. Dadurch ist ein Luftspalt zwischen dem Trägerteil und dem Strahlungskörper gebildet. Auf diese Weise wird eine Wärmeisolierung zwischen dem Trägerteil und dem Strahlungskörper realisiert. Insbesondere wird eine Wärmeübertragung auf das Trägerteil reduziert. Dies verringert vorteilhaft den Temperaturgradienten innerhalb des Strahlungskörpers.

Gemäß einem weiteren Aspekt der Erfindung ist Suchkopf für einen Lenkflugkörper vorgesehen. Der Suchkopf weist einen Dom mit einer Strahlungsdurchtrittsöffnung auf. Der Dom definiert insbesondere einen Innenraum. Der Dom weist eine Strahlungsdurchtrittsöffnung auf. Diese kann beispielsweise als strukturelle Ausnehmung des Doms gebildet sein oder als ein Bereich des Doms, welcher für Strahlung im IR-Bereich transparent ist. Innerhalb des Doms bzw. in dem durch dem Dom definierten Innenraum ist ein Infrarotdetektor, kurz IR-Detektor, angeordnet. Der IR-Detektor ist der Strahlungsdurchtrittsöffnung gegenüberliegend angeordnet und weist eine Absorptionsoberfläche auf, die dazu ausgebildet ist IR-Strahlung zu Absorbieren. Die Absorptionsoberfläche kann insbesondere durch eine Vielzahl diskreter Bereiche einer Oberfläche eines Substrats gebildet sein, die jeweils mit einer IR-absorbierenden Schicht beschichtet sind. Diese Bereiche bilden Pixel aus, welche jeweils die von dem Objekt emittierte Strahlung zumindest teilweise absorbieren. Ferner weist der Suchkopf eine innerhalb des Doms angeordnete Abgleichvorrichtung nach einer der voranstehend beschriebenen Ausführungsformen auf. Die Abgleichvorrichtung ist zur Durchführung einer Ungleichförmigkeitskorrektur zwischen die Strahlungsdurchtrittsöffnung und die Absorptionsoberfläche des Infrarotdetektors einfahrbar. Alternativ hierzu ist der Infrarotdetektor derart verstellbar in dem Dom gelagert, dass die Absorptionsoberfläche des Infrarotdetektors der Abgleichvorrichtung zugewandt orientiert ist.

Gemäß diesem Aspekt der Erfindung ist also die Abgleichvorrichtung innerhalb eines Suchkopfs angeordnet, wobei die Abgleichvorrichtung und der IR-Detektor relativ zueinander derart positionierbar sind, dass der Strahlungskörper der Abgleichvorrichtung und die Absorptionsoberfläche des IR-Detektors einander zugewandt orientiert sind. Dies kann beispielsweise durch eine translatorische oder eine rotatorische Verstellbarkeit der Abgleichvorrichtung oder des IR-Detektors realisiert werden. Insbesondere kann jeweils ein an den Dom und die Abgleichvorrichtung oder den IR-Detektor kinematisch gekoppelter Stellantrieb zur Ausführung der jeweiligen Verstellbewegung vorgesehen sein. Optional kann die Abgleichvorrichtung oder der IR-Detektor jeweils zusätzlich über eine Führungsvorrichtung, welche eine Bewegungsbahn der Abgleichvorrichtung oder des IR-Detektors definiert, an den Dom gekoppelt sein.

Gemäß einer Ausführungsform des Suchkopfs kann zwischen der Strahlungsdurchtrittsöffnung und dem Infrarotdetektor eine optische Strahlungslenkungseinrichtung, insbesondere in Form einer Linse oder einer Linsenanordnung, angeordnet sein.

Nach einem weiteren Aspekt der Erfindung ist ein Verfahren zur Durchführung einer Ungleichförmigkeitskorrektur eines Infrarotdetektors in einem Suchkopf eines Lenkflugkörpers vorgesehen. Das erfindungsgemäße Verfahren weist insbesondere folgende Verfahrensschritte auf:
- Anordnen einer Abgleichvorrichtung, die gemäß einer der voranstehend beschriebenen Ausführungsformen ausgebildet ist, und des Infrarotdetektors relativ zueinander derart, dass eine Absorptionsoberfläche des Infrarotdetektors dem Strahlungskörper der Abgleichvorrichtung zugewandt orientiert ist;
- Einstellen, optional Regeln einer Temperatur des Strahlungskörpers auf eine vorbestimmte Abgleichtemperatur; und
- Kalibrieren mittels einzelner Pixel der Absorptionsoberfläche jeweils erfasster Temperaturen auf die vorbestimmte Abgleichtemperatur.

Das Einstellen der Abgleichtemperatur umfasst insbesondere ein Heizen des Strahlungskörpers, beispielsweise mittels einer Heizeinrichtung, auf eine Solltemperatur. Dies kann beispielsweise durch einfache Einstellung einer bestimmten, beispielsweise konstanten Heizleistung über eine vorbestimmte von der Ist-Temperatur des Strahlungskörpers zu Beginn des Heizvorgangs abhängige Zeitdauer erfolgen. Diese Start-Ist-Temperatur kann beispielsweise mittels eines optionalen thermisch an die Heizeinrichtung oder den Strahlungskörper gekoppelten Temperatursensors ermittelt werden. Alternativ hierzu kann auch eine an anderer Stelle im Suchkopf gemessene Temperatur als näherungsweise Start-Ist-Temperatur verwendet werden. Ausgehend von dieser Start-Ist-Temperatur erfolgt eine Einstellung einer Heizleistung über eine gewisse Dauer. Die Zeitdauer kann in einer Wertetabelle hinterlegt sein, in welcher einem Wert für die Start-Ist-Temperatur und einem Wert für die Heizleistung jeweils eine Zeitdauer zugeordnet ist. Die Wertetabelle kann insbesondere empirisch bestimmt worden sein.

Alternativ kann eine Regelung der Heizleistung vorgesehen sein, beispielsweise mittels einer Steuerungseinrichtung, welche als Regelgröße beispielsweise die durch einen optionalen thermisch an die Heizeinrichtung gekoppelten Temperatursensor erfasste näherungsweise Ist-Temperatur des Strahlungskörpers verwendet.

Die Abgleichtemperatur kann insbesondere in einem Bereich zwischen 0 Grad Celsius und 60 Grad Celsius, bevorzugt in einem Bereich zwischen 10 Grad Celsius und 30 Grad Celsius und insbesondere bevorzugt zwischen 18 Grad Celsius und 22 Grad Celsius liegen. In diesem Bereich werden besonders genaue Ergebnisse der NUC erzielt.

Im Folgenden wird die Erfindung unter Bezugnahme auf die Figuren der Zeichnungen erläutert. Von den Figuren zeigen:
- Fig. 1: eine perspektivische Ansicht einer Explosionsdarstellung einer Abgleichvorrichtung gemäß einem Ausführungsbeispiel der vorliegenden Erfindung;
- Fig. 2: eine perspektivische Ansicht der in Fig. 1 gezeigten Abgleichvorrichtung in montiertem Zustand;
- Fig. 3: eine schematische Schnittansicht eines Suchkopfs gemäß einem Ausführungsbeispiel der vorliegenden Erfindung; und
- Fig. 4: eine schematische Schnittansicht eines Suchkopfs gemäß einem weiteren Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

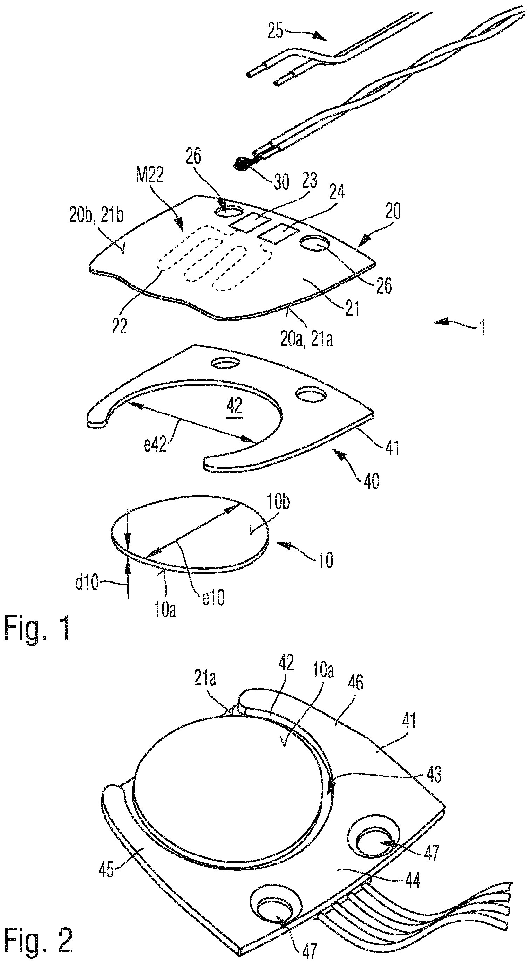

Fig. 1 zeigt eine Explosionsdarstellung einer Abgleichvorrichtung 1. Die Abgleichvorrichtung 1 zur Durchführung einer Ungleichförmigkeitskorrektur eines Infrarotdetektors 102 in einem Suchkopf 100 eines Lenkflugkörpers. Wie in Fig. 1 gezeigt, weist die Abgleichvorrichtung 1 einen Strahlungskörper 10, eine Heizeinrichtung 20 zur Einstellung einer Abgleichtemperatur des Strahlungskörpers 10, einen optionalen Temperatursensor 30 und eine optionale Halteeinrichtung 40 auf. In Fig. 2 ist die in Fig. 1 als Explosionsdarstellung gezeigte Abgleichvorrichtung 1 in einem zusammengebauten bzw. montierten Zustand dargestellt.

Die Heizeinrichtung 20 ist thermisch leitend an den Strahlungskörper 10 gekoppelt. Wie in Fig. 1 beispielhaft gezeigt ist, weist die Heizeinrichtung 20 eine Trägerfolie 21 und einen elektrischen Widerstandsheizdraht 22 auf. Die Trägerfolie 21 ist als sich flächig erstreckende Folie ausgebildet und kann insbesondere eine polygonische Umfangsgestalt aufweisen, insbesondere eine etwa trapezförmige Umfangsgestalt, wie dies beispielhaft in Fig. 1 dargestellt ist. Ferner können in der Trägerfolie 21 Ausnehmungen 26 ausgebildet sein, die zur Durchführung von Befestigungseinrichtungen, wie z.B. Schrauben, Bolzen oder dergleichen, vorgesehen sind. Die Trägerfolie 21 kann insbesondere aus Kapton gebildet sein.

Der Widerstandsheizdraht 22 kann beispielsweise in den Querschnitt der Trägerfolie 21 integriert sein. Alternativ hierzu kann der Widerstandsheizdraht 22 auf einer ersten Oberfläche 21a der Trägerfolie 21 angeordnet sein, insbesondere auf diese Oberfläche 21a aufgedruckt sein. Die erste Oberfläche 21a bildet eine Kontaktoberfläche 20a der Heizeinrichtung 20. Der Widerstandsheizdraht 22 verläuft in einem Heizdrahtmuster M22 an der Trägerfolie 21. Das Heizdrahtmuster M22 kann insbesondere, einen schlangenlinienförmig meandernden Verlauf aufweisen, wie dies in Fig. 1 beispielhaft dargestellt ist. Es ist jedoch auch denkbar, dass das Heizdrahtmuster M22 einen spiralförmigen, zick-zack-förmigen oder einen vergleichbaren Verlauf aufweist. Wie in Fig. 1 schematisch dargestellt ist, sind an den Enden des Heizdrahts 22 jeweils Anschlussstellen 23, 24 vorgesehen, über welche der Heizdraht 22 mittels elektrischer Anschlusskabel 25 an eine elektrische Stromquelle (nicht dargestellt), insbesondere eine Gleichstromquelle, anschließbar ist.

Wie in den Fig. 1 und 2 jeweils beispielhaft gezeigt ist, weist der Strahlungskörper 10 eine flächige Gestalt auf Insbesondere ist der Strahlungskörper 10 als gewölbte Schale mit einem kreisförmigen Umfang gestaltet, wie dies in Fig. 1 beispielhaft gezeigt ist. Allgemein kann der Strahlungskörper als dünnes platten- oder scheibenförmiges Bauteil mit oder ohne Krümmung gestaltet sein. Der Strahlungskörper 10 weist eine erste Oberfläche 10a auf, welche als eine

Referenzfläche zur Emission thermischer Strahlung vorgesehen ist. Ferner weist der Strahlungskörper 10 eine entgegengesetzt zu der ersten Oberfläche 10 orientierte zweite Oberfläche 10b auf. Der in Fig. 1 beispielhaft gezeigte Strahlungskörper 10 kann insbesondere eine Dicke d10 in einem Bereich zwischen 0,1 mm und 4 mm, insbesondere zwischen 1 mm und 3 mm, und einen Durchmesser e10 in einem Bereich zwischen 4 mm und 250 mm, insbesondere zwischen 10 mm und 15 mm, aufweisen. Die Dicke d10 kann hierbei insbesondere als ein kleinstmöglicher Abstand zwischen einem Punkt der ersten Oberfläche 10a und einem Punkt der zweiten Oberfläche 10b verstanden werden. Der Durchmesser e10 kann insbesondere als Durchmesser des kreisförmigen Umfangs oder, im Falle eines nicht kreisförmigen Umfangs, als maximaler Abstand zweier auf dem Umfang gelegener Punkte verstanden werden. Der Strahlungskörper 10 kann insbesondere als Aluminiumkörper realisiert sein. Optional ist zumindest die erste Oberfläche 10a des Strahlungskörpers 10 mit einer schwarzen Deckschicht beschichtet, welche einen hohen Emissionskoeffizienten im IR-Bereich aufweist.

Die thermisch leitenden Kopplung des Strahlungskörpers 10 an die Heizeinrichtung 20 wird durch eine flächig anliegende Anordnung des Strahlungskörpers 10 an der Kontaktoberfläche 20a der Heizeinrichtung 20 realisiert. Wie in Fig. 1 gezeigt ist, kann beispielsweise die zweite Oberfläche 10b des Strahlungskörpers 10 mit der ersten Oberfläche 21a der Trägerfolie 20 kontaktiert werden. Optional sind die erste Oberfläche 21a der Trägerfolie 20 und die zweite Oberfläche 10b des Strahlungskörpers 10 miteinander verklebt. Durch die flächige Gestaltung von Heizeinrichtung 20 und Strahlungskörper 10 wird eine verbesserte flächige Verteilung der von der Heizeinrichtung 20 abgegebenen Wärmeleistung erzielt. Insbesondere wird ein Temperaturgradient über die erste Oberfläche 10 des Strahlungskörpers 10 verringert.

Der optionale Temperatursensor 30 ist zur Erfassung einer Temperatur der Heizeinrichtung 20 und damit zur näherungsweisen Erfassung der Temperatur des Strahlungskörpers 10 vorgesehen. Der Temperatursensor kann insbesondere als temperaturabhängiger elektrischer Widerstand, beispielsweise als PT-1000 Element, realisiert sein, der thermisch an die Heizeinrichtung gekoppelt ist. Wie in Fig. 1 gezeigt ist, kann der Temperatursensor 30 beispielsweise an der zweiten Oberfläche 21b der Trägerfolie 21 und damit entgegengesetzt zu dem Strahlungskörper 10 angebracht sein. Dadurch wird zuverlässig eine Beeinflussung der Strahlungsemission durch den Temperatursensor 30 verhindert.

Die Trägerfolie 21 kann insbesondere an der optionalen Halteeinrichtung 40 befestigt sein, wie dies beispielhaft in Fig. 2 gezeigt ist. Die Halteeinrichtung 40 dient somit zur mechanisch festen Lagerung der Trägerfolie 21. Die Halteeinrichtung 40 kann insbesondere eine Trägereinrichtung 41 aufweisen. Wie in den Fig. 1 und 2 beispielhaft gezeigt ist, kann die Trägereinrichtung 41 insbesondere als ein gabelförmiges Bauteil mit einem Steg 44 und zwei sich von diesem aus erstreckenden Schenkeln 45, 46 ausgebildet sein. Der Steg 44 und die Schenkel 45, 46 definieren gemeinsam eine Ausnehmung 42, welche optional an einer gegenüberliegend dem Steg 44 gelegenen Stelle unterbrochen ist, wie dies beispielhaft in Fig. 2 gezeigt ist. Allgemein ist das Trägerteil 41 als ein platten- oder schalenförmiges Bauteil mit einer Ausnehmung 42 realisiert. Die Ausnehmung 42 weist einen Durchmesser e42 auf, der größer ist als der Durchmesser e10 des Strahlungskörpers 10. An der Halteeinrichtung 40, insbesondere an dem Trägerteil 41 der Halteeinrichtung 40 können Montageausnehmungen 47 zur Aufnahme von Befestigungseinrichtungen (nicht gezeigt), wie Bolzen, Schrauben oder dergleichen, vorgesehen sein. In Fig. 1 und 2 sind beispielhaft zwei Ausnehmungen 47 vorgesehen, die beabstandet zueinander in dem Steg 47 ausgebildet sind.

Wie in Fig. 2 beispielhaft gezeigt ist, ist die Trägerfolie 21 an dem Trägerteil 41 befestigt. Der Strahlungskörper 10 ist in der Ausnehmung 42 angeordnet. Durch den größeren Durchmesser e42 der Ausnehmung 42 des Trägerteils 41 ist zwischen dem Strahlungskörper 10 und dem Trägerteil 41 ein Luftspalt 43 gebildet. Dadurch wird eine gute thermische Isolation zwischen dem Trägerteil 41 und dem Strahlungskörper 10 erzielt.

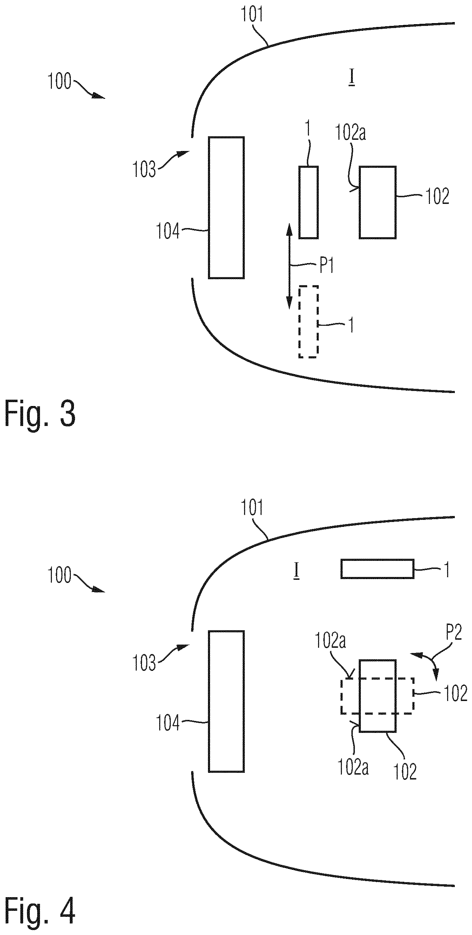

Die Fig. 3 und 4 zeigen jeweils schematisch eine Schnittansicht eines Suchkopfs 100 eines Lenkflugkörpers. Der Suchkopf 100 weist einen Dom, einen Infrarotdetektor 102, kurz IR-Detektor, die oben beschriebene Abgleichvorrichtung 1 sowie eine optionale optische Strahlungslenkungseinrichtung 104 auf.

Der Dom 101 definiert bzw. umgrenzt einen Innenraum I des Suchkopfs. Ferner weist der Dom 101 eine Strahlungsdurchtrittsöffnung 103 auf, welche beispielswiese wie in den Fig. 3 und 4 gezeigt im Bereich eines Scheitelpunkts des Doms 101 ausgebildet sein kann. Die Strahldurchtrittsöffnung 103 ermöglicht ein Eindringen von Infrarotstrahlung (IR-Strahlung) in den Innenraum I. Die Strahldurchtrittsöffnung 103 ist in den Fig. 3 und 4 symbolisch als strukturelle Öffnung des Doms 101 dargestellt, wobei die Strahldurchtrittsöffnung 103 auch als ein aus einem für IR-Strahlung transparenten Material gebildeter Bereich ausgebildet sein kann.

Der Infrarotdetektor 102 weist eine Absorptionsoberfläche 102a auf, welche zur Absorption von IR-Strahlung ausgebildet ist. Die Absorptionsoberfläche 102a kann insbesondere durch eine Vielzahl diskreter Bereiche einer Oberfläche eines Substrats gebildet sein, die jeweils mit einer IR-absorbierenden Schicht beschichtet sind (nicht dargestellt). Diese Bereiche bilden Pixel aus, welche jeweils die von einem Objekt emittierte Strahlung zumindest teilweise absorbieren. Wie in den Fig. 3 und 4 gezeigt, ist der Infrarotdetektor 102 der Strahlungsdurchtrittsöffnung 103 gegenüberliegend angeordnet.

Die Abgleichvorrichtung 1 ist ebenfalls im Innenraum I des Doms 101 angeordnet, wie dies in den Fig. 3 und 4 gezeigt ist.

Wie in Fig. 3 beispielhaft gezeigt ist, kann vorgesehen sein, dass der IR-Detektor 102 ortsfest innerhalb des Innenraums I des Suchkopfs 100 angeordnet ist, wobei die Absorptionsoberfläche 102a der Strahlungsdurchtrittsöffnung 103 zugewandt orientiert ist. In diesem Fall ist die Abgleichvorrichtung 1 zwischen die Strahlungsdurchtrittsöffnung 103 und eine Absorptionsoberfläche 102a des Infrarotdetektors 102 einfahrbar. Wie in Fig. 3 schematisch gezeigt, kann die Abgleichvorrichtung 1 insbesondere zwischen einer Abgleichposition, in welcher die Abgleichvorrichtung 1 zwischen der Strahlungsdurchtrittsöffnung 103 und der Absorptionsoberfläche 102a des IR-Detektors 102 angeordnet und die erste Oberfläche 10a des Strahlungskörpers 10 der Absorptionsoberfläche 102a zugewandt ist, und einer Rückfahrstellung verfahrbar, in welcher die Abgleichvorrichtung 1 außerhalb eines Projektionsbereichs der Absorptionsoberfläche 102a positioniert ist. In Fig. 3 ist die Abgleichvorrichtung 1 symbolisch als Block dargestellt, wobei dieser in der Rückfahrstellung der Abgleichvorrichtung 1 mit einer gestrichelten Linie und in der Abgleichstellung der Abgleichvorrichtung 1 mit einer vollen Linie dargestellt ist. Die translatorische Bewegung zwischen der Rückfahrstellung und der Abgleichstellung ist in Fig. 3 durch den Pfeil P1 symbolisch dargestellt und kann beispielsweise durch einen Stelltrieb (nicht dargestellt) realisiert werden.

Alternativ hierzu kann auch vorgesehen sein, dass die Abgleichvorrichtung 1 ortsfest in dem Innenraum I des Doms 101 angeordnet ist und der Infrarotdetektor 102 derart verstellbar in dem Dom 101 gelagert ist, dass die Absorptionsoberfläche 102a der Abgleichvorrichtung 1 zugewandt orientiert ist, wie dies in Fig. 4 dargestellt ist. Hierbei ist also der IR-Detektor 102 zwischen einer Arbeitsstellung, in welcher die Absorptionsoberfläche 102a der Strahlungsdurchtrittsöffnung 103 zugewandt orientiert ist, und einer Abgleichstellung, in welcher die Absorptionsoberfläche 102a der ersten Oberfläche 10a des Strahlungskörpers 10 der Abgleichvorrichtung 1 zugewandt orientiert ist, bewegbar. Dies kann beispielsweise durch eine drehbare Lagerung des IR-Detektors 102 in dem Dom 101 realisiert werden. In Fig. 4 ist der IR-Detektor 102 symbolisch als Block dargestellt, wobei dieser in der Abgleichstellung mit einer gestrichelten Linie und in der Arbeitsstellung mit einer vollen Linie dargestellt ist. Die rotatorische Bewegung des IR-Detektors zwischen der Arbeitsstellung und der Abgleichstellung ist in Fig. 4 durch den Pfeil P2 symbolisch dargestellt und kann beispielsweise durch einen Stelltrieb (nicht dargestellt) realisiert werden.

Die optionale optische Strahlungslenkungseinrichtung 104 kann beispielsweise insbesondere in Form einer Linse oder einer Linsenanordnung realisiert sein und ist zwischen der Strahldurchtrittsöffnung 103 und dem IR-Detektor angeordnet.

Zur Durchführung einer Ungleichförmigkeitskorrektur des Infrarotdetektors 102 in dem Suchkopf 100 werden die Abgleichvorrichtung 1 der Infrarotdetektor 102 relativ zueinander derart angeordnet, dass eine Absorptionsoberfläche 102a des Infrarotdetektors 102 dem Strahlungskörper 10 der Abgleichvorrichtung 1 zugewandt orientiert ist. Dies kann beispielsweise durch Einstellen der Abgleichstellung des IR-Detektors 102 oder durch Verfahren der Abgleichvorrichtung 1 in die Abgleichstellung realisiert werden. Weiterhin erfolgt ein Einstellen der Temperatur des Strahlungskörpers 10 auf eine vorbestimmte Abgleichtemperatur. Hierzu wird der Strahlungskörper mittels der Heizeinrichtung 20 auf eine Solltemperatur geheizt. Dies kann beispielsweise durch einfache Einstellung einer bestimmten, beispielsweise konstanten Heizleistung über eine vorbestimmte von der Ist-Temperatur des Strahlungskörpers 10 abhängige Zeitdauer erfolgen. Auch kann eine Regelung der Heizleistung vorgesehen sein, beispielsweise mittels einer Steuerungseinrichtung (nicht dargestellt), welche als Regelgröße beispielsweise die durch den optionalen Temperatursensor erfasste Ist-Temperatur des Strahlungskörpers 10 verwendet. Beispielsweise kann als Solltemperatur eine Temperatur in einem Bereich zwischen 0 Grad Celsius und 60 Grad Celsius eingestellt werden. Anschließend erfolgt ein Kalibrieren der mittels einzelner Pixel der Absorptionsoberfläche 102a jeweils erfassten Temperaturen auf die vorbestimmte Abgleichtemperatur. Beim Kalibrieren werden dabei die Ausgabesignale der Einzelnen Pixel so korrigiert, dass diese jeweils die an dem Strahlungskörper der Abgleichvorrichtung eingestellte Temperatur repräsentieren.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Abgleichvorrichtung
- 10: Strahlungskörper
- 10a: erste Oberfläche des Strahlungskörpers
- 10b: zweite Oberfläche des Strahlungskörpers
- 20: Heizeinrichtung
- 20a: Kontaktoberfläche der Heizeinrichtung
- 21: Trägerfolie
- 21a: erste Oberfläche der Trägerfolie
- 22: Widerstandsheizdraht
- 23,24: Anschlussstellen
- 25: Anschlusskabel
- 30: Temperatursensor
- 40: Halteeinrichtung
- 41: Trägerteil
- 42: Ausnehmung des Trägerteils
- 43: Luftspalt
- 44: Steg
- 45,46: Schenkel
- 47: Montageausnehmungen
- M22: Heizdrahtmuster
- 100: Suchkopf
- 101: Dom
- 102: Infrarotdetektor
- 102a: Absorptionsoberfläche des Infrarotdetektors
- 103: Strahlungsdurchtrittsöffnung
- 104: optische Strahlungslenkungseinrichtung
- d10: Dicke des Strahlungskörpers
- e10: Durchmesser des Strahlungskörpers
- e42: Durchmesser der Ausnehmung des Trägerteils
- I: Innenraum
- P1, P2: Pfeil

## Patentansprüche

1. Abgleichvorrichtung (1) zur Durchführung einer
Ungleichförmigkeitskorrektur eines Infrarotdetektors (102) in einem Suchkopf (100) eines Lenkflugkörpers, mit:
einem Strahlungskörper (10),welcher eine flächige Gestalt aufweist und als gewölbte Schale mit einem kreisförmigen Umfang ausgestaltet ist; und
einer thermisch leitend an den Strahlungskörper (10) gekoppelten Heizeinrichtung (20) zur Einstellung einer vorbestimmten Abgleichtemperatur des Strahlungskörpers (10) mit einer Trägerfolie (21) und einem elektrischen Widerstandsheizdraht (22), welcher in einem Heizdrahtmuster (M22) an der Trägerfolie (21) verläuft;
wobei der Strahlungskörper (10) flächig an einer Kontaktoberfläche (20a) der Heizeinrichtung (20) anliegt.

2. Abgleichvorrichtung (1) nach Anspruch 1, wobei der Strahlungskörper (10) eine Dicke (d10) in einem Bereich zwischen 0,1 mm und 4 mm aufweist und einen Durchmesser (e10) in einem Bereich zwischen 4 mm und 250 mm aufweist.

3. Abgleichvorrichtung (1) nach Anspruch 1 oder 2, wobei der Strahlungskörper (10) als Aluminiumkörper ausgebildet ist, wobei bevorzugt zumindest eine erste Oberfläche (10a) des Strahlungskörpers (10) mit einer schwarzen Deckschicht beschichtet ist.

4. Abgleichvorrichtung (1) nach einem der voranstehenden Ansprüche, zusätzlich aufweisend einen Temperatursensor (30) zur Erfassung einer Temperatur der Heizeinrichtung (20).

5. Suchkopf (100) für einen Lenkflugkörper, mit:
einem Dom (101) mit einer Strahlungsdurchtrittsöffnung (103);
einem innerhalb des Doms (101) angeordneten Infrarotdetektor (102),
welcher der Strahlungsdurchtrittsöffnung (103) gegenüberliegend angeordnet ist; und
einer innerhalb des Doms (101) angeordneten Abgleichvorrichtung (1) nach einem der voranstehenden Ansprüche;
wobei die Abgleichvorrichtung (1) zur Durchführung einer Ungleichförmigkeitskorrektur zwischen die Strahlungsdurchtrittsöffnung (103) und eine Absorptionsoberfläche (102a) des Infrarotdetektors (102) einfahrbar ist oder der Infrarotdetektor (102) derart verstellbar in dem Dom (101) gelagert ist, dass die Absorptionsoberfläche (102a) des Infrarotdetektors (102) der Abgleichvorrichtung (1) zugewandt orientiert ist.

6. Suchkopf (100) nach Anspruch 5, wobei zwischen der Strahlungsdurchtrittsöffnung (103) und dem Infrarotdetektor (102) eine optische Strahlungslenkungseinrichtung (104), insbesondere in Form einer Linse oder einer Linsenanordnung, angeordnet ist.

7. Verfahren zur Durchführung einer Ungleichförmigkeitskorrektur eines Infrarotdetektors (102) in einem Suchkopf (100) eines Lenkflugkörpers mit folgenden Verfahrensschritten:
Anordnen einer Abgleichvorrichtung (1) gemäß einem der Ansprüche 1 bis 4 und des Infrarotdetektors (102) relativ zueinander derart, dass eine Absorptionsoberfläche (102a) des Infrarotdetektors (102) dem Strahlungskörper (10) der Abgleichvorrichtung (1) zugewandt orientiert ist;
Einstellen einer Temperatur des Strahlungskörpers (10) auf eine vorbestimmte Abgleichtemperatur; und
Kalibrieren mittels einzelner Pixel der Absorptionsoberfläche (102a) jeweils erfasster Temperaturen auf die vorbestimmte Abgleichtemperatur.

8. Verfahren nach Anspruch 7, wobei die Abgleichtemperatur in einem Bereich zwischen 0 Grad Celsius und 60 Grad Celsius liegt.

## Claims

1. Compensation device (1) for correcting an irregularity in an infrared detector (102) in a seeker head (100) of a guided missile, comprising:
a radiation body (10), which has a planar shape and is configured as a curved shell having a circular periphery; and
a heating device (20), thermally conductively coupled to the radiation body (10), for setting a predetermined compensation temperature of the radiation body (10), comprising a carrier film (21) and an electrical resistance heating wire (22) which extends in a heating wire pattern (M22) on the carrier film (21);
the radiation body (10) lying in a planar manner on a contact surface (20a) of the heating device (20).

2. Compensation device (1) according to claim 1, wherein the radiation body (10) has a thickness (d10) in a range between 0.1 mm and 4 mm and a diameter (e10) in a range between 4 mm and 250 mm.

3. Compensation device (1) according to either claim 1 or claim 2, wherein the radiation body (10) is formed as an aluminium body, preferably at least a first surface (10a) of the radiation body (10) being coated with a black cover layer.

4. Compensation device (1) according to any of the preceding claims, additionally having a temperature sensor (30) for detecting a temperature of the heating device (20).

5. Seeker head (100) for a guided missile, comprising:
a dome (101) comprising a radiation passage opening (103); an infrared detector (102) arranged inside the dome (101) and opposite the radiation passage opening (103); and
a compensation device (1) according to any of the preceding claims arranged inside the dome (101);
wherein the compensation device (1) can be retracted between the radiation passage opening (103) and an adsorption surface (102a) of the infrared detector (102) to correct an irregularity, or the infrared detector (102) is mounted adjustably in the dome (101) in such a way that the adsorption surface (102a) of the infrared detector (102) is orientated facing the compensation device (1).

6. Seeker head (100) according to claim 5, wherein an optical radiation deflection device (104), in particular in the form of a lens or lens arrangement, is arranged between the radiation passage opening (103) and the infrared detector (102) .

7. Method for correcting an irregularity in an infrared detector (102) in a seeker head (100) of a guided missile, having the following method steps:
arranging a compensation device (1) according to any of claims 1 to 4 and the infrared detector (102) relative to one another in such a way that an absorption surface (102a) of the infrared detector (102) is orientated facing the radiation body (10) of the compensation device (1);
setting a temperature of the radiation body (10) to a predetermined compensation temperature; and
calibrating temperatures respectively detected by individual pixels of the absorption surface (102a) to the predetermined compensation temperature.

8. Method according to claim 7, wherein the compensation temperature is in a range between 0 degrees Celsius and 60 degrees Celsius.

## Revendications

1. Dispositif de tarage (1) pour effectuer une correction de non-uniformité d'un détecteur infrarouge (102) dans une tête chercheuse (100) d'un missile guidé, comprenant :
un corps rayonnant (10) qui présente une forme plane et est conçu comme une coque bombée avec une périphérie circulaire ; et
un moyen de chauffage (20) couplé de manière thermiquement conductrice au corps rayonnant (10) pour le réglage d'une température de tarage prédéterminée du corps rayonnant (10) avec une feuille support (21) et un fil chauffant résistant électrique (22) qui s'étend en un motif de fil chauffant (M22) sur la feuille support (21) ;
dans lequel le corps rayonnant (10) s'applique à plat sur une surface de contact (20a) du moyen de chauffage (20).

2. Dispositif de tarage (1) selon la revendication 1, dans lequel le corps rayonnant (10) présente une épaisseur (d10) dans une plage comprise entre 0,1 mm et 4 mm et un diamètre (e10) dans une plage comprise entre 4 mm et 250 mm.

3. Dispositif de tarage (1) selon la revendication 1 ou 2, dans lequel le corps rayonnant (10) est réalisé sous la forme d'un corps en aluminium, de préférence dans lequel au moins une première surface (10a) du corps rayonnant (10) est revêtue d'une couche de couverture noire.

4. Dispositif de tarage (1) selon l'une des revendications précédentes, présentant en outre un capteur de température (30) pour détecter une température du moyen de chauffage (20) .

5. Tête chercheuse (100) pour un missile guidé, comportant :
un dôme (101) avec une ouverture de passage de rayonnement (103) ;
un détecteur infrarouge (102) disposé à l'intérieur du dôme (101), lequel est disposé en face de l'ouverture de passage de rayonnement (103) ; et
un dispositif de tarage (1) selon l'une des revendications précédentes, disposé à l'intérieur du dôme (101) ;
dans laquelle le dispositif de tarage (1) peut être introduit entre l'ouverture de passage de rayonnement (103) et une surface d'absorption (102a) du détecteur infrarouge (102) pour effectuer une correction de non-uniformité ou le détecteur infrarouge (102) est monté réglable dans le dôme (101) de telle sorte que la surface d'absorption (102a) du détecteur infrarouge (102) soit orientée vers le dispositif de tarage (1).

6. Tête chercheuse (100) selon la revendication 5, dans laquelle un moyen optique de déviation de rayonnement (104), en particulier sous la forme d'une lentille ou d'un agencement de lentilles, est disposé entre l'ouverture de passage de rayonnement (103) et le détecteur infrarouge (102) .

7. Procédé pour effectuer une correction de non-uniformité d'un détecteur infrarouge (102) dans une tête chercheuse (100) d'un missile guidé, comprenant les étapes de procédé consistant à :
disposer un dispositif de tarage (1) selon l'une des revendications 1 à 4 et le détecteur infrarouge (102) l'un par rapport à l'autre de telle sorte qu'une surface d'absorption (102a) du détecteur infrarouge (102) soit orientée vers le corps rayonnant (10) du dispositif de tarage (1) ;
régler une température du corps rayonnant (10) à une température de tarage prédéterminée ; et
étalonner au moyen de pixels individuels de la surface d'absorption (102a) des températures respectivement détectées à la température de tarage prédéterminée.

8. Procédé selon la revendication 7, dans lequel la température de tarage se situe dans une plage comprise entre 0 degré Celsius et 60 degrés Celsius.
